(19)

Europäisches
Patentamt
European
Patent Office
Office européen
des brevets

(11) **EP 1 950 785 A1**

(12) **EUROPEAN PATENT APPLICATION**
published in accordance with Art. 158(3) EPC

(43) Date of publication:
**30.07.2008 Bulletin 2008/31**

(21) Application number: **06821929.4**

(22) Date of filing: **18.10.2006**

(51) Int Cl.:
**H01J 1/304** (2006.01)     **H01J 9/02** (2006.01)
**B05D 7/24** (2006.01)     **C01B 31/02** (2006.01)

(86) International application number:
**PCT/JP2006/320735**

(87) International publication number:
**WO 2007/046413 (26.04.2007 Gazette 2007/17)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **19.10.2005   JP 2005305073**

(71) Applicants:
• **Bussan Nanotech Research Institute Inc.**
  **Tokyo 100-0004 (JP)**
• **MITSUI & CO., LTD.**
  **Tokyo 100-0004 (JP)**

(72) Inventors:
• **OKUBO, Tsuyoshi**
  **Tokyo 100-0004 (JP)**

• **HANDA, Koichi**
  **Tokyo 100-0004 (JP)**
• **SUBIANTORO**
  **Tokyo 100-0004 (JP)**
• **TSUKADA, Takayuki**
  **Tokyo 100-0004 (JP)**
• **SHAN, Jiayi**
  **Tokyo 100-0004 (JP)**
• **YAMAUCHI, Akira**
  **Tokyo 100-0004 (JP)**
• **NAGASHIMA, Manabu**
  **Tokyo 100-0004 (JP)**

(74) Representative: **Brykman, Georges**
**Osha Liang**
**121, Avenue des Champs Élysées**
**75008 Paris (FR)**

(54) **ELECTRON EMISSION SOURCE**

(57)     An electron emission source is disclosed, in which the fine carbon fibers included are uniformly dispersed as compared with those in the conventionally known electron emission sources, and the manufacturing of which is also easy.

The electron emission source is manufactured by preparing a carbon fibrous structures' dispersion which comprises at least carbon fibrous structures and a binder resin, wherein carbon fibrous structure comprises a three dimensional network of carbon fibers, each of which having an outside diameter of 15 - 100 nm, wherein the carbon fibrous structure further comprises a granular part, at which two or more carbon fibers are bound in a state that the carbon fibers extend outwardly therefrom, and wherein the granular part is produced in a growth process of the carbon fibers; applying the carbon fibrous structures' dispersion onto the substrate; and solidifying the applied carbon fibrous structures' dispersion.

FIG. 8

EP 1 950 785 A1

**Description**

**TECHNICAL FIELD**

This invention relates to an electron emission source which emits electrons in response to an applied electric field.

**BACKGROUND ART**

Among electron emitting elements, a field emission display (FED) proposed at the beginning used as the electron emission source the spindt type in which a material such as molybdenum or silicon were layered and tip of which were sharpen was used. The spindt type electron emission source, however, has a ultrafine structure, and thus, the manufacturing procedure thereof is an complicated one and requires highly precise manufacturing techniques. Therefore,thelimitation of area enlarging of the field emission display has been realized.

Thus, recently, studies for applying carbonaceous substances which have a low work function as the electron emission source have been vigorously made. Particularly, fine carbon fibers of a high aspect (length-to-width) ratio i.e., the so-called carbon nanotubes, show a ultrafine appearance which tip portion shows a radius of curvature being of about 100 angstroms, and they can smoothly emit electrons even when applying an external voltage of a miniscule 1 -3 V/$\mu$m. Therefore, it has been expected as an ideal electron emission source. Since such carbon nanotubes can be driven with a low voltage owing to the low work function thereof, and are easy to be manufactured, the carbon nanotubes can show a further advantage in realizing a large area display.

In general, the carbon nanotubes as mentioned above are prepared in a paste form in conjunction with solvent, resin, etc., and then the paste is applied on a substrate according to the screen printing method, and further, the printed article undergoes a thermal treatment in order to be formed as an electron emission source (See, for instance, Patent Literature 1).

[Patent Literature 1] JP 2000 - 36243 A

**DISCLOSURE OF THE INVENTION**

**PROBLEMS TO BE SOLVED BY THIS INVENTION**

However, such fine carbon fibers unfortunately show an aggregate state even just after their synthesis. When these aggregates are used as-is, the fine carbon fibers would be poorly dispersed in the solvent or resin, and thus it is difficult to provide a uniform electron emission source.

Therefore, this invention is made under such circumstances, and aims to provide an electron emission source in which the fine carbon fibers included are uniformly dispersed as compared with those in the conventionally known electron emission sources, and the manufacturing of which is also easy.

**MEANS FOR SOLVING THE PROBLEMS**

As a result of our diligent study for solving the above problems, we, the inventors, have found that, in order to give fine carbon fibers for preparing the electron emission source intended, the effective things are to adapt carbon fibers having a diameter as small as possible; to make an areolar structure of the carbon fibers where the fibers are mutually combined tightly so that the fibers do not behave individually and which sustains their areolar state in the resin matrix; and to adapt as the carbon fibers per se ones which are designed to have a minimum amount of defects, and then, we have attained the present invention.

The present invention for solving the above mentioned problems is, therefore, an electron emission source which is manufactured by preparing a carbon fibrous structures' dispersion which comprises at least carbon fibrous structures and a binder resin, wherein carbon fibrous structure comprises a three dimensional network of carbon fibers, each of which having an outside diameter of 15 - 100 nm, wherein the carbon fibrous structure further comprises a granular part, at which two or more carbon fibers are bound in a state that the carbon fibers extend outwardly therefrom, and wherein the granular part is produced in a growth process of the carbon fibers; applying the carbon fibrous structures' dispersion onto the substrate; and solidifying the applied carbon fibrous structures' dispersion.

In the present invention, after solidifying the applied carbon fibrous structures' dispersion, a further surface treatment maybe adaptable in order to allow the carbon fibrous structures to be exposed on the surface.

In the present invention, the carbon fibrous structures may have an area-based circle-equivalent mean diameter of 50 - 100 $\mu$m.

In the present invention, the carbon fibrous structures may have a bulk density of 0.0001 - 0.05g/cm$^3$.

In the present invention, the carbon fibrous structures may have an $I_D/I_G$ ratio determined by Raman spectroscopy of not more than 0.2.

In the present invention, the carbon fibrous structures may have a combustion initiation temperature in air of not less than 750 °C.

In the present invention, the particle diameter of the granular part at a binding portion for carbon fibers may be larger than the outside diameters of the carbon fibers.

In the present invention, the carbon fibrous structures may be produced using as carbon sources of at least two carbon compounds, which have mutually different decomposition temperatures.

## EFFECTS OF THE INVENTION

According to the present invention, since the carbon fibrous structures are comprised of three dimensionally configured carbon fibers having ultrathin diameters and bound together by a granular part produced in a growth process of the carbon fibers so that said carbon fibers extend outwardly from the granular part, the carbon fibrous structures can disperse readily into a dispersion medium which comprises binder resin, etc., and which is used for preparing the carbon fibrous structures' dispersion for manufacturing the electron emission source, while maintaining their bulky structure of being characterized in the network configuration. Therefore, the electron emission source which is formed by applying the carbon fibrous structures' dispersion on the substrate is the one in which the fine carbon fibers are distributed uniformly throughout the emitter.

## BRIEF DESCRIPTION OF THE DRAWINGS

[Fig. 1] is a SEM photo of an intermediate for the carbon fibrous structure used for an electron emission source according to the present invention;

[Fig. 2] is a TEM photo of an intermediate for the carbon fibrous structure used for an electron emission source according to the present invention;

[Fig. 3] is a SEM photo of a carbon fibrous structure used for an electron emission source according to the present invention;

[Fig. 4A] and [Fig. 4B] are TEM photos of a carbon fibrous structure used for an electron emission source according to the present invention, respectively;

[Fig. 5] is a SEM photo of a carbon fibrous structure used for an electron emission source according to the present invention;

[Fig. 6] is an X-ray diffraction chart of a carbon fibrous structure used for an electron emission source according to the present invention and of an intermediate thereof;

[Fig. 7] is Raman spectra of a carbon fibrous structure used for an electron emission source according to the present invention and of an intermediate thereof;

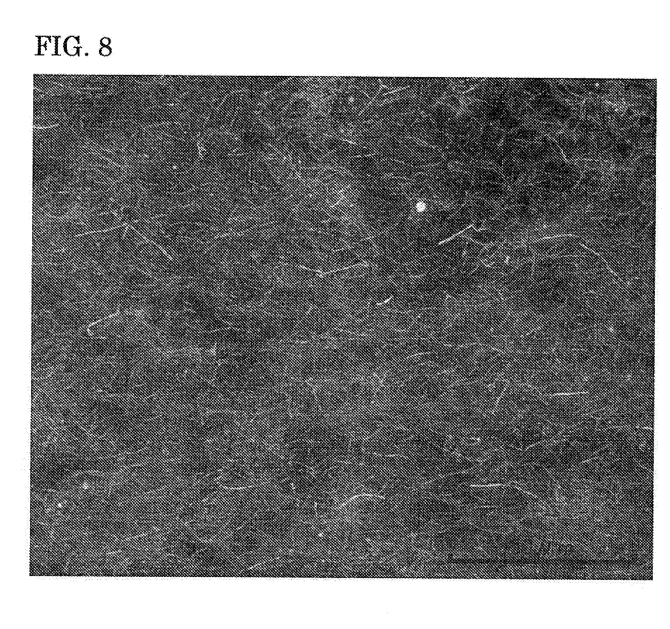

[Fig. 8] is an optical microphotograph of an electron emission source according to the present invention; and

[Fig. 9] is a schematic diagram illustrating a generation furnace used for manufacturing carbon fibrous structures in an Example.

## EXPLANATION OF NUMERALS

1 Generation furnace
2 Inlet nozzle
3 Collision member
4 Raw material mixture gas supply port
a Inner diameter of inlet nozzle
b Inner diameter of generation furnace
c Inner diameter of Collision member
d Distance from upper end of generation furnace to raw material mixture gas supply port
e Distance from raw material mixture gas supply port to lower end of collision member
f Distance from raw material mixture gas supply port to lower end of generation furnace

**BEST MODE FOR CARRYING OUT THE INVENTION**

Now, the present invention will be described in detail with reference to some preferable embodiments. The electron emission source according to the present invention is manufactured by preparing a carbon fibrous structures' dispersion which comprises at least carbon fibrous structures and a binder resin, wherein carbon fibrous structure comprises a three dimensional network of carbon fibers, each of which having an outside diameter of 15 - 100 nm, wherein the carbon fibrous structure further comprises a granular part, at which two or more carbon fibers are bound in a state that the carbon fibers extend outwardly therefrom, and wherein the granular part is produced in a growth process of the carbon fibers; applying the carbon fibrous structures' dispersion onto the substrate; and solidifying the applied carbon fibrous structures' dispersion.

Therefore, first, the carbon fibrous structures' dispersion which is necessitated for manufacturing the electron emission source according to the present invention will be explained.

The carbon fibrous structures' dispersion is composed at least of carbon fibrous structures each having a specified configuration and a binder resin.

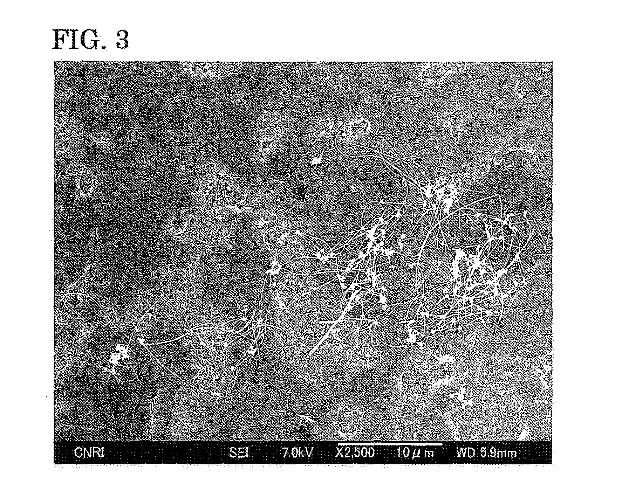

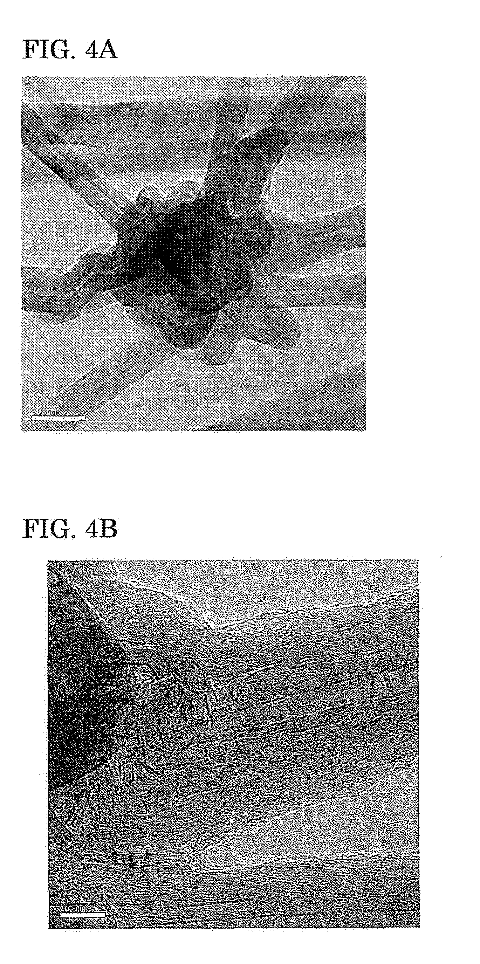

Each carbon fibrous structure to be used in the present invention is, as shown in SEM photo of Fig. 3 and TEM photos of Fig. 4A and 4B, composed of a thee-dimensionally network of carbon fibers each having an outside diameter of 15 - 100 nm, and a granular part with which the carbon fibers are bound together so that the concerned carbon fibers elongate outwardly from the granular part.

The reason for restricting the outside diameter of the carbon fibers which constitutes the carbon fibrous structure to a range of 15 nm to 100 nm is because when the outside diameter is less than 15 nm, even a sufficiently small structural defect on the surface may become a cause of the conductive failure and which may bring the deterioration of the electron emission capability. On the other hand, when the outside diameter exceeds 100 nm, the distribution of the carbon fibrous structure into a resin or the like becomes difficult, and thus such a larger diameter is not suitable. Incidentally, it is more desirable for the outside diameter of the carbon fibers to be in the range of 20 - 70 nm.

Carbon fibers that have a diameter within the preferable range and whose tubular graphene sheets are layered one by one in the direction that is orthogonal to the fiber axis, i.e., being of a multilayer type, can enjoy a high flexural rigidity and ample elasticity. In other words, such fibers would have a property of being easy to restore their original shape after undergoing any deformation. Therefore, even after the carbon fibrous structures have been dispersed into the binder resin or the like, they tend to take a sparse structure in the resin or the like. As a result, it is possible to prepare an electron emission source where the carbon fibers for emitting electrons are dispersed uniformly. Further, since the carbon fibers show a elasticity of some extent, it is easy to provide a condition that the carbon fibers protrude through the surface of coating layer, and the protruded carbon fibers, per se, can be used as the electron emitting sources.

Incidentally, when annealing at a temperature of not less than 2400°C, the spacing between the layered graphene sheets becomes lesser and the true density of the carbon fiber is increased from 1.89 $g/cm^3$ to 2.1 $g/cm^3$, and the cross sections of the carbon fiber perpendicular to the axis of carbon fiber come to show polygonal figures. As a result, the carbon fibers having such constitution become denser and have fewer defects in both the stacking direction and the surface direction of the graphene sheets that make up the carbon fiber, and thus their flexural rigidity (EI) can be enhanced.

Additionally, it is preferable that the outside diameter of the fine carbon fiber undergoes a change along the axial direction of the fiber. In the case that the outside diameter of the carbon fiber is not constant, but changed along the axial direction of the fiber, it would be expected that some anchor effect may be provided to the carbon fiber in the carbon fibrous structures' dispersion, and thus the migration of the carbon fiber in the carbon fibrous structures' dispersion can be restrained, leading to improved dispersion stability.

Then, in the carbon fibrous structure used in the present invention, fine carbon fibers having a predetermined outside diameter and being configured three dimensionally are bound together by a granular part produced in a growth process of the carbon fibers so that the carbon fibers are elongated outwardly from the granular part. Since multiple carbon fibers are not only entangled each other, but tightly bound together at the granular part, the carbon fibers will not disperse as single fibers, but will be dispersed as intact bulky carbon fibrous structures when distributed into the carbon fibrous structures' dispersion. Thus, it is possible to form a good electron emission source at last. Further, since the fine carbon fibers in the carbon fibrous structure to be used in the present invention are bound together by a granular part produced in the growth process of the carbon fibers , the carbon fibrous structure itself can enjoy superior properties such as electric property. For instance, when determining electrical resistance under a certain pressed density, the carbon fibrous structure to be used in the present invention shows an extremely low resistivity, as compared with that of a simple aggregate of the fine carbon fibers and that of the carbon fibrous structures in which the fine carbon fibers are fixed at the contacting points with a carbonaceous material or carbonized substance therefromafter the synthesis of the carbon fibers. Thus, when the carbon fibrous structures distributed into the carbon fibrous structures' dispersion, they can form good conductive paths within the matrix. Thereby, an even electron emitting capability throughout the whole surface to which the dispersion is applied can be attained.

Since the granular part is produced in the growth process of the carbon fibers as mentioned above, the carbon - carbon bonds at the granular part are well developed. Further, the granular part appears to include mixed state of $sp^2$- and $sp^3$- bonds, although it is not clear accurately. After the synthesis process (in the "intermediate" or "first intermediate" defined hereinafter), the granular part and the fibrous parts are continuous mutually because of a structure comprising patch-like sheets of carbon atoms laminated together. Further, after the high temperature treatment, at least a part of graphene layers constituting the granular part is continued on graphene layers constituting the fine carbon fibers elongated outwardly from the granular part, as shown in Figs. 4A and 4B. In the carbon fibrous structure according to the present invention, as symbolized by such a fact that the graphene layers constituting the granular part is continued on the graphene layers constituting the fine carbon fibers, the granular part and the fine carbon fibers are bound together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associated with the hollow part maybe observed) .

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2 - 40 nm, and more preferably, 3 - 15 nm.

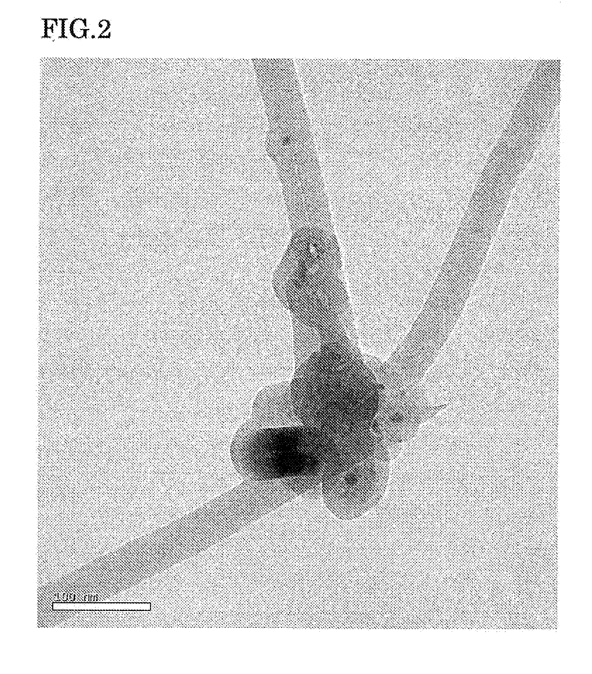

Furthermore, it is preferable that the diameter of the granular part is larger than the outside diameter of the carbon fibers as shown in Fig.2, although it is not specifically limited thereto. Concretely, for example, the diameter of granular part is 1.3 - 250 times larger than the outside diameter of the carbon fibers, preferably 1.5 - 100 times, and more preferably, 2.0 - 25 times larger, on average. When the granular part, which is the binding site of the carbon fibers, has a much larger particle diameter, that is, 1.3 times or more larger than the outer diameter of the carbon fibers, the carbon fibers that are elongated outwardly from the granular part have stronger binding force, and thus, even when the carbon fibrous structures are exposed to a relatively high shear stress during combining with a matrix such as resin, they can be dispersed as maintaining its three-dimensional carbon fibrous structures into the matrix. When the granular part has an extremely larger particle diameter, that is, exceeding 250 times of the outer diameter of the carbon fibers, the undesirable possibility that the fibrous characteristics of the carbon fibrous structure are lost will arise. Therefore, the carbon fibrous structure will not be suitable for fine carbon fibers for the electron emission source, and thus it is not desirable. The "particle diameter of the granular part" used herein is the value which is measured by assuming that the granular part, which is the binding site for the mutual carbon fibers, is one spherical particle.

Although the concrete value for the particle diameter of the granular part will be depended on the size of the carbon fibrous structure and the outer diameters of the fine carbon fibers in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Additionally, the binding of the carbon fibers at the granular part is very tight as compared with, for example, that in the structure in which mutual contacting points among the carbon fibers are fixed with carbonaceous material or carbonized substance therefrom. It is also because the granular part is produced in the growth process of the carbon fibers as mentioned above. Even under such a condition as to bring about breakages in the carbon fibers of the carbon fibrous structure, the granular part (the binding site) is maintained stably. Specifically, for example, when the carbon fibrous structures are dispersed in a liquid medium and then subjected to ultrasonic treatment with a selected wavelength and a constant power under a load condition by which the average length of the carbon fibers is reduced to about half of its initial value as shown in the Examples described later, the changing rate in the mean diameter of the granular parts is not more than 10%, preferably, not more than 5%, thus, the granular parts, i.e., the binding sites of fibers are maintained stably.

In carbon fibrous structures to be used in the present invention, it is preferable that the carbon fibrous structure has an area-based circle-equivalent mean diameter of 50 - 100 $\mu$m, and more preferably, 60 - 90 $\mu$m. The "area-based circle-equivalent mean diameter" used herein is the value which is determined by taking a picture of the outside shapes of the carbon fibrous structures with a suitable electron microscope, etc., tracing the contours of the respective carbon fibrous structures in the obtained picture using a suitable image analysis software, e.g., WinRoof™ (Mitani Corp.), and measuring the area within each individual contour, calculating the circle-equivalent mean diameter of each individual carbon fibrous structure, and then, averaging the calculated data.

Although it is not to be applied in all cases because the circle-equivalent mean diameter may be influenced by the kind of the binder resin to be complexed, the circle-equivalent mean diameter may become a factor by which the maximum length of a carbon fibrous structure upon combining with the binder resin is determined. In general, when the circle-equivalent mean diameter is not more than 50 μm, the function of the obtained electron emission source may not be expected to reach a sufficient level, while when it exceeds 100 μm, an undesirable increase in viscosity may be expected to happen upon kneading of the carbon fibrous structures into the binder resin. The increase in viscosity may be followed by failure of dispersion of the carbon fibrous structures into the binder resin or inferiority in the formability.

As mentioned above, the carbon fibrous structure according to the present invention has the configuration where the fine carbon fibers existing in three dimensional network state are bound together by the granular part (s) so that the carbon fibers are externally elongated from the granular part(s). When two or more granular parts are present in a carbon fibrous structure, wherein each granular part binds the fibers so as to form the three dimensional network, the mean distance between adjacent granular parts may be, for example, 0.5 - 300 μm, preferably, 0.5 - 100 μm, and more preferably, 1-50 μm. The distance between adjacent granular parts used herein is determined by measuring distance from the center of a granular part to the center of another granular part which is adjacent the former granular part. When the mean distance between the granular parts is less than 0.5 μm, a configuration where the carbon fibers form an inadequately developed three dimensional network may be obtained. Therefore, it may become difficult to form good electrically conductive paths when the carbon fiber structures each having such an inadequately developed three dimensional network are added and dispersed to a matrix such as a resin. Meanwhile, when the mean distance exceeds 300 μm, an undesirable increase in viscosity may be expected to happen upon adding and dispersing the carbon fibrous structures in the matrix. The increase in viscosity may result in an inferior dispersibility of the carbon fibrous structures to the matrix.

Furthermore, the carbon fibrous structure to be used in the present invention may exhibit a bulky, loose form in which the carbon fibers are sparsely dispersed, because the carbon fibrous structure is comprised of carbon fibers that are configured as a three dimensional network and are bound together by a granular part so that the carbon fibers are elongated outwardly from the granular part as mentioned above. It is desirable that the bulk density thereof is in the range of 0.0001 - 0.05 g/cm$^3$, more preferably, 0.001 - 0.02 g/cm$^3$. When the bulk density exceeds 0.05 g/cm$^3$, it would become difficult to function as the electron emission source substantially.

Furthermore, a carbon fibrous structure to be used in the present invention can enjoy good electric properties in itself, since the carbon fibers configured as a three dimensional network in the structure are bound together by a granular part produced in the growth process of the carbon fibers as mentioned above. For instance, it is desirable that a carbon fibrous structure to be used in the present invention has a powder electric resistance determined under a certain pressed density, 0.8 g/cm$^3$, of not more than 0.02 Ω · cm, more preferably, 0.001 to 0.010 Ω · cm. If the particle's resistance exceeds 0.02 Ω · cm, it may become difficult to form good electrically conductive paths when the structures are added to a binder resin or the like.

In order to enhance the strength and electric conductivity of the carbon fibrous structure used in the present invention, it is desirable that the graphene sheets that make up the carbon fibers have a small number of defects, and more specifically, for example, the $I_D/I_G$ ratio of the carbon fiber determined by Raman spectroscopy is not more than 0.2, more preferably, not more than 0.1. Incidentally, in Raman spectroscopic analysis, with respect to a large single crystal graphite, only the peak (G band) at 1580 cm$^{-1}$ appears. When the crystals are of finite ultrafine sizes or have any lattice defects, the peak (D band) at 1360 cm$^{-1}$ can appear. Therefore, when the intensity ratio ($R=I_{1360}/I_{1580}=I_D/I_G$) of the D band and the G band is below the selected range as mentioned above, it is possible to say that there is little defect in graphene sheets.

Furthermore, it is desirable that the carbon fibrous structure to be used in the present invention has a combustion initiation temperature in air of not less than 750 °C, preferably, 800 °C - 900 °C. Such a high thermal stability would be brought about by the above mentioned facts that it has little defects and that the carbon fibers have a predetermined outside diameter.

A carbon fibrous structure having the above described, desirable configuration may be prepared as follows, although it is not limited thereto.

Basically, an organic compound such as a hydrocarbon is chemical thermally decomposed through the CVD process in the presence of ultrafine particles of a transition metal as a catalyst in order to obtain a fibrous structure (hereinafter referred to as an "intermediate"), and then the intermediate thus obtained undergoes a high temperature heating treatment.

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

When as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio between the compounds. Therefore, as the carbon compounds, a relatively large number of combinations can be used by adjusting the composition ratio of two or more carbon compounds in the raw gas.

For example, the carbon fibrous structure to be used in the present invention can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected from the group consisting of alkanes or cycloalkanes such as methane, ethane, propanes, butanes, pentanes, hexanes, heptane, cyclopropane, cycrohexane, particularly, alkanes having 1 -7 carbon atoms; alkenes or cycloolefin such as ethylene, propylene, butylenes, pentenes, heptenes, cyclopentene, particularly, alkenes having 1 - 7 carbon atoms; alkynes such as acetylene, propyne, particularly, alkynes having 1 - 7 carbon atoms; aromatic or heteroaromatic hydorocarbons such as benzene, toluene, styrene, xylene, naphthalene, methyl naphtalene, indene, phenanthrene, particularly, aromatic or heteroaromatic hydorocarbons having 6 -18 carbon atoms; alcohols such as methanol, ethanol, particularly, alcohols having 1 -7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the molar ratio of methane/benzene is >1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately. For example, in the case of adjusting the methane / benzene molar ratio to 3, 2 mol methane may be added to 1 mol toluene. As the methane to be added to the toluene, it is possible to use the methane which is contained as an unreacted form in the exhaust gas discharged from the reaction furnace, as well as a freshmethane specially supplied.

Using the composition ratio within such a range, it is possible to obtain the carbon fibrous structure in which both the carbon fiber parts and granular parts are efficiently developed.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 °C - 1300 °C. By following such synthesis procedures, the product obtained is an aggregate, which is of several to several tens of centimeters in size and which is composed of plural carbon fibrous structures (intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction. The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle.

Accordingly, by changing the balance between the thermal decomposition rate and the growing rate intentionally, it is possible to control the growth of carbon material to occur in multi-direction rather than in single direction, and to produce three dimensional structures that are related to the present invention. In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

With respect to the method for preparing the carbon fibrous structure to be used in the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used herein means a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of metal atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, since concentration, temperature, etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency. Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure to be used in the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the starting point. For example, embodiments where various shapes of baffles, paddles, tapered tubes, umbrella shaped elements, etc., are used singly or in varying combinations and located at one or more positions may be adaptable.

The intermediate, obtained by heating the mixture of the catalyst and hydrocarbon at a constant temperature in the range of 800 °C - 1300°C, has a structure that resembles sheets of carbon atoms laminated together, (and being still in a half-raw, or incomplete condition). When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate is subjected to a high temperature heat treatment at 2400 - 3000 °C using a proper method in order to remove such residues from the intermediate and to produce the intended carbon fibrous structure with few defects.

For instance, the intermediate may be heated at 800 - 1200 °C to remove the unreacted raw material and volatile flux such as the tar moiety, and thereafter annealed at a high temperature of 2400 - 3000 °C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the intermediate at a temperature of 2400 - 3000 °C, the patch-like sheets of carbon atoms are rearranged to associate mutually and then form multiple graphene sheet-like layers.

After or before such a high temperature heat treatment, the aggregates may be subjected to crushing in order to obtain carbon fibrous structures, each having an area-based circle-equivalent mean diameter of several centimeters. Then, the obtained carbon fibrous structures may be subjected to pulverization in order to obtain the carbon fibrous structures having an area-based circle-equivalent mean diameter of 50 - 100 $\mu$m. It is also possible to perform the pulverization directly without crushing. On the other hand, the initial aggregates involving plural carbon fibrous structures to be used in the present invention may also be granulated for adjusting shape, size, or bulk density to one's suitable for using a particular application. More preferably, in order to utilize effectively the above structure formed from the reaction, the annealing would be performed in a state such that the bulk density is low (the state that the fibers are extended as much as they can and the voidage is sufficiently large). Such a state may contribute to improved electric conductivity of a resin matrix.

Next, the binder resin as another component which composes the carbon fibrous structures' dispersion will be explained.

In the present invention, the binder resin perform the ultimate functions of fixing the above mentioned carbon fibrous structures onto the substrate. Therefore, any resin can be used appropriately as the binder resin as far as it can perform the functions. Concretely, it may be an inorganic binder resin or an organic binder resin, and, for instance, acrylic type resins, epoxy type resins, cellulose type resins such as ethyl cellulose and nitrocellulose, are enumerated.

As the using amount of the binder resin, there is no particular limitation as far as the amount can perform the above mentioned functions, that is, the functions capable of fixing the above mentioned carbon fibrous structures onto the substrate of the electron emission source. Concretely, for instance, it is preferable to be in the range of 10 - 80 % based on the total weight of the carbon fibrous structures dispersion. When the binder resin is less than 10%, it may become difficult to fix the carbon fibrous structures. On the other hand, when the binder resin exceeds 80%, there is a fear that almost all of the carbon fibrous structures are embedded in the binder resin and thus the amount of the carbon fibrous structures exposed at the surface will decrease as the next logical step, and as a result of this, the function as the electron emission source will be degraded. Even in such a situation, however, the function as the electron emission source can come up, when the surface of the coated layer undergoes grinding or other surface treatment so as to expose the embedded carbon fibrous structures at surface after the binder resin is hardened.

The carbon fibrous structures' dispersion used in the present invention may contain some components other than the above mentioned carbon fibrous structures and the binder resin.

For instance, it may contain an organic solvent for solving the binder resin. As the organic solvent, for instance, butyl carbitol, butyl carbitol acetate, terpineol, etc., are usable, and as the amount of the solvent, for instance, it may be in the range of 60 - 80%, although the kind and amount are not particularly limited to those mentioned above.

Furthermore, in the dispersion, a photosensitive monomer, a photopolymerization initiator, a photosensitive resin such as polyester acrylate type, a non-photosensitive resin such as acrylate and vinyl types, a dispersing agent, a defoamer, etc., may be included optionally.

Next, the manufacturing method for the electron emission source according to the present invention will be explained.

First, the carbon fibrous structures' dispersion which includes at least the carbon fibrous structures and the binder resin is prepared and then it is applied on the substrate.

As the applying method, there is no particular limitation, and, for instance, various printing procedure such as spin coating, screen printing, roll coating, etc., may be adaptable.

Further, as the substrate onto which the carbon fibrous structures' dispersion is applied, there is no particular limitation, and, for instance, it may be selected from various materials such as metals, semiconductors, insulators, etc., in accordance with the field of usage intended.

Then, by allowing the binder resin contained in the applied carbon fibrous structures' dispersion to harden, the carbon fibrous structures are fixed on the substrate.

As the hardening procedure for the binder resin, there is no particular limitation, and it may be optimally selected in accordance with the kind of the binder resin used. For instance, in the case that the binder resin used is a thermosetting resin, the hardening can be accomplished by heat treatment of baking. The heat treatment may be performed under vacuum condition or under the presence of an inert gas such as nitrogen gas or the like. In another case that a photosensitive monomer is contained in the carbon fibrous structures' dispersion, the binder resin can be hardened by undergoing exposure, development and baking in sequence.

Although the electron emission source manufactured according to the above mentioned procedure, as-is, can be sufficiently fit for practical use, an additional treatment where the surface of the hardened binder resin layer is treated up to an extent that the carbon fibrous structures are exposed at surface. As mentioned above, when the mixing ratio of the binder resin is relatively high, it will be arisen that carbon fibrous structures are embedded in the binder resin and thus the amount of the carbon fibrous structures exposed at the surface are decrease. In such a case, by applying the surface treatment as mentioned above and thus removing a part of the hardened binder resin, it is possible to expose edges of the carbon fibrous structures at surface.

Further, as previously described, since each carbon fibrous structure using in the present invention shows a three dimensional network configuration, and thus the individual carbon fibers which constitutes the carbon fibrous structure are oriented to various directions. Thus, in the case that some parts of the carbon fibrous structures are exposed as its intact condition at surface of the hardened binder resin, the directions of the exposed edges of the carbon fibrous structures may be in disorder. When the surface treatment as mentioned above is applied, some parts of the carbon fibrous structures are cut away, and thus, the branched carbon fibers would be cut off at the points near the branching sites. In this case, the directions of the cut carbon fibers can be unified. Namely, in the case that the electron emission source according to the present invention underwent the surface treatment, the carbon fibers show a unique characteristic of being isotropy at the surface region, and being anisotropy at interior region.

## EXAMPLES

Hereinafter, this invention will be illustrated in detail by practical examples. However, it is to be understood that the invention is not limited to the described examples.

Incidentally, the respective physical properties of the carbon fibrous structures used in the present invention are measured by the following protocols.

<Area based circle-equivalent mean diameter>

First, a photograph of pulverized product was taken with SEM. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views. Contours of the individual carbon fibrous structures were traced using the image analysis software, WinRoof ™ (trade name, marketed by Mitani Corp.), and area within each individual contour was measured, circle-equivalent mean diameter of each individual carbon fibrous structure was calculated, and then, the calculated data were averaged to determine the area based circle-equivalent mean diameter.

<Measurement of Bulk density>

1 g of powder was placed into a 70 mm caliber transparent cylinder equipped with a distribution plate, then air supply at 0.1 Mpa of pressure, and 1.3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

<Raman spectroscopic analysis>

The Raman spectroscopic analysis was performed with the equipment LabRam 800 manufactured by HORIBA JOBIN YVON, S.A.S., and using 514 nm the argon laser.

<TG combustion temperature>

Combustion behavior was determined using TG-DTA manufactured by MAC SCIENCE CO. LTD., at air flow rate of 0.1 liter/minute and heating rate of 10 °C/minute. When burning, TG indicates a quantity reduction and DTA indicates an exothermic peak. Thus, the top position of the exothermic peak was defined as the combustion initiation temperature.

<X ray diffraction>

Using the powder X ray diffraction equipment (JDX3532, manufactured by JEOL Ltd.), carbon fibrous structures after annealing processing were examined. K$\alpha$ ray which was generated with Cu tube at 40 kV, 30 mA was used, and the measurement of the spacing was performed in accordance with the method defined by The Japan Society for the Promotion of Science (JSPS), described in "Latest Experimental Technique For Carbon Materials (Analysis Part)", Edited by Carbon Society of Japan, 2001), and as the internal standard silicon powder was used.

<Particle's resistance and decompressibility>

1 g of CNT powder was scaled, and then press-loaded into a resinous die (inner dimensions: 40 L, 10 W, 80 H (mm)), and the displacement and load were read out. A constant current was applied to the powder by the four-terminal method, and in this condition the voltage was measured. After measuring the voltage until the density come to 0.9g/cm$^3$, the applied pressure was released and the density after decompression was measured. Measurements taken when the powder was compressed to 0.5, 0.8 or 0.9 g/cm$^3$ were adopted as the particle's resistance.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, assuming each individual granular part which is the binding point of carbon fibers to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, the calculated data were averaged to determine the area based circle-equivalent mean diameter. Roundness (R) was determined by inputting value of the area(A) within each individual contour computed by the above and a measured value of each individual contour's length (L) to the following equation to calculate the roundness of each individual granular part, and then, averaging the calculated data.

$$[\text{Numerical Formula 1}]$$

$$R = A * 4\pi / L^2$$

Further, the outer diameter of the fine carbon fibers in the individual carbon fibrous structures to be measured were determined, and then, from the outer diameter determined and the circle-equivalent mean diameter of the granular part calculated as above, the ratio of circle-equivalent mean diameter to the outer diameter of the fine carbon fiber was calculated for each individual carbon fibrous structure, and then the data obtained are averaged.

<Mean distance between granular parts>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, all places where the granular parts were mutually linked with a fine carbon fiber were found out. Then, at the respective places, the distance between the adjacent granular parts which were mutually linked with the fine carbon fiber (the length of the fine carbon fiber including the center of a granular part at one end to the center of another granular part at another end) was measured, and then the data obtained were averaged.

<Destruction test for carbon fibrous structure>

To 100ml of toluene in a lidded vial, the carbon fiber structures were added at a rate of 30 μg/ml in order to prepare the dispersion liquid sample of the carbon fibrous structure.

To the dispersion liquid sample of the carbon fibrous structure thus prepared, Ultrasound was applied using a ultrasonic cleaner (manufactured by SND Co., Ltd., Trade Name: USK-3) of which generated frequency was 38 kHz and power was 150 w, and the change of the carbon fibrous structure in the dispersion liquid was observed in the course of time aging.

First, 30 minutes after the application of ultrasound was started, a 2 ml constant volume aliquot of the dispersion sample was pipetted, and the photo of the carbon fibrous structures in the aliquot was taken with SEM. On the obtained SEM photo, 200 pieces of fine carbon fibers in the carbon fibrous structures (fine carbon fibers at least one end of which is linked to the granular part) were selected randomly, then the length of the each individual selected fine carbon fibers was measured, and mean length $D_{50}$ was calculated. The mean length calculated is taken as the initial average fiber length.

Meanwhile, on the obtained SEM photo, 200 pieces of granular parts which each were the binding point of carbon fibers in the carbon fibrous structures were selected randomly. Assuming each individual selected granular part to be a particle, contours of the individual granular parts were traced using the image analysis software, WinRoof ™ (trade name, marketed by Mitani Corp.), and area within each individual contour was measured, circle-equivalent mean diameter of each individual granular part was calculated, and then, $D_{50}$ mean value thereof is calculated. The $D_{50}$ mean value calculated was taken as the initial average diameter of the granular parts.

Thereafter, according to the same procedure, a 2 ml constant volume aliquot of the dispersion sample was pipetted every constant periods, and the photo of the carbon fibrous structures in the each individual aliquot was taken with SEM, and the mean length $D_{50}$ of the fine carbon fibers in the carbon fibrous structure and the mean diameter $D_{50}$ of the granular part in the carbon fibrous structure were calculated individually.

At the time when the mean length $D_{50}$ of the fine carbon fibers comes to be about half the initial average fiber length (in the following Examples, 500 minutes after the application of ultrasound is stated.), the mean diameter $D_{50}$ of the granular part was compared with the initial average diameter of the granular parts in order to obtain the rate of variability (%) thereof.

<Electrical Conductivity>

In an obtained sheet sample, using 4-pin probe type low resistivity meter(LORESTA-GP,manufactured by Mitsubishi Chemical), the resistance ($\Omega$) at nine points of coated film surface was measured. Then, the measured values are converted into volume resistivity ($\Omega \cdot cm$) by the resistivity meter, and an average was calculated.

<Electron Emitting Capability>

A filmwhich can constitute the electron emission source according to the present invention was prepared by spin coating the carbon fibrous structures' dispersion onto a smooth surface of a 30 mm x 30 m quartz substrate onto which ITO film had been formed by spattering in advance, removing almost all of tetrahydrofuran at a room temperature, and further heating at 120 °C for 2 hours. A gold plate was placed at a distance of 100 $\mu$m from the above mentioned film as the electron emission source, so as to face the film. Thus, an electrode pair of which cathode is the former plate, and anode is the latter film was prepared. Under the conditions that the electrode pair was placed in a vacuum chamber of $10^{-1}$ - $10^{-3}$ Pa and an electrical field was applied, the anode's current at a field intensity of 1 V/$\mu$m was determined.

<Example 1>

i) Synthesis of carbon fibrous structures

By the CVD process, carbon fibrous structures were synthesized from toluene as the raw material. The synthesis was carried out in the presence of a mixture of ferrocene and thiophene as the catalyst, and under the reducing atmosphere of hydrogen gas. Toluene and the catalyst were heated to 380 °C along with the hydrogen gas, and then they were supplied to the generation furnace, and underwent thermal decomposition at 1250 °C in order to obtain the carbon fibrous structures (first intermediate).

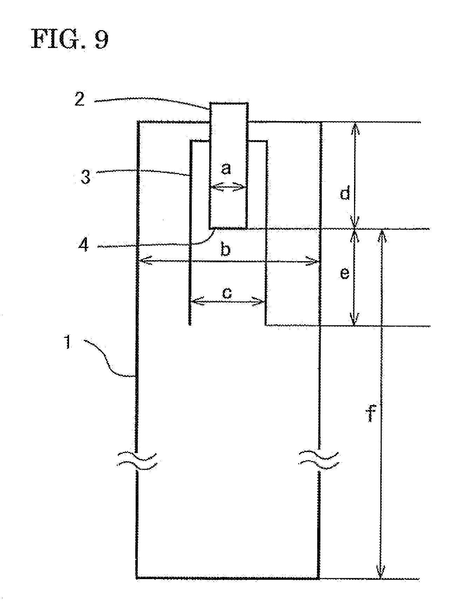

The generation furnace used for the carbon fibrous structures (first intermediate) is illustrated schematically in Fig. 9. As shown in Fig. 9, the generation furnace 1 was equipped at the upper part thereof with a inlet nozzle 2 for introducing the raw material mixture gas comprising toluene, catalyst and hydrogen gas as aforementioned into the generation furnace 1. Further, at the outside of the inlet nozzle 2, a cylindrical-shaped collision member 3 was provided. The collision member 3 was set to be able to interfere in the raw material gas flow introduced from the raw material supply port 4 located at the lower end of the inlet nozzle 2. In the generation furnace 1 used in this Example, given that the inner diameter of the inlet nozzle 2, the inner diameter of the generation furnace 1, the inner diameter of the cylindrical-shaped collision member 3, the distance from the upper end of the generation furnace 1 to the raw material mixture gas supply port 4, the distance from the raw material mixture gas supply port 4 to the lower end of the collision member 3, and the distance from the raw material mixture gas supply port 4 to the lower end of the generation furnace 1 were "a", "b", "c", "d", "e", and "f", respectively, the ratio among the above dimensions was set as a:b:c:d:e:f = 1.0:3.6:1.8:3.2:2.0: 21.0. The raw material gas supplying rate to the generation furnace was 1850 NL/min., and the pressure was 1.03 atms.

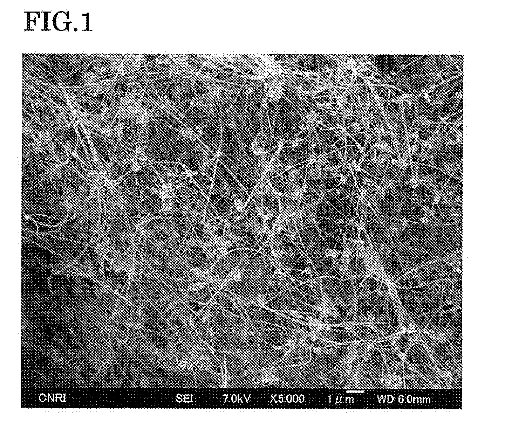

The synthesized first intermediate was baked at 900 °C in nitrogen gas in order to remove hydrocarbons such as tar and to obtain a second intermediate. The R value of the second intermediate measured by the Raman spectroscopic analysis was found to be 0.98. Sample for electron microscopes was prepared by dispersing the first intermediate into toluene. Figs. 1 and 2 show SEM photo and TEM photo of the sample, respectively.

Further, the second intermediate underwent a high temperature heat treatment at 2600 °C. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. Fig. 3, and Figs. 4A and 4B show SEM photo and TEM photos of the sample, respectively.

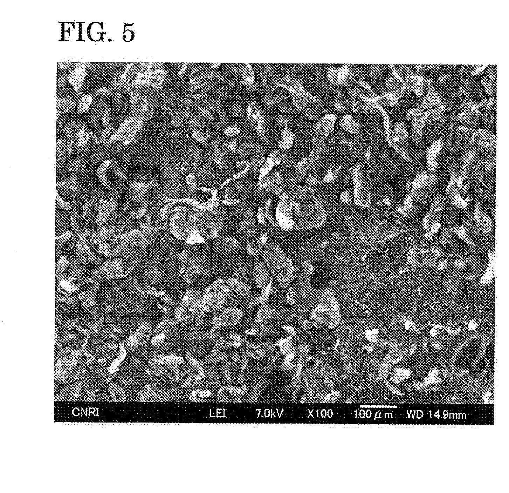

Fig. 5 shows SEM photo of the obtained carbon fibrous structures as mounted on a sample holder for electron microscope, and Table 1 shows the particle distribution of obtained carbon fibrous structures.

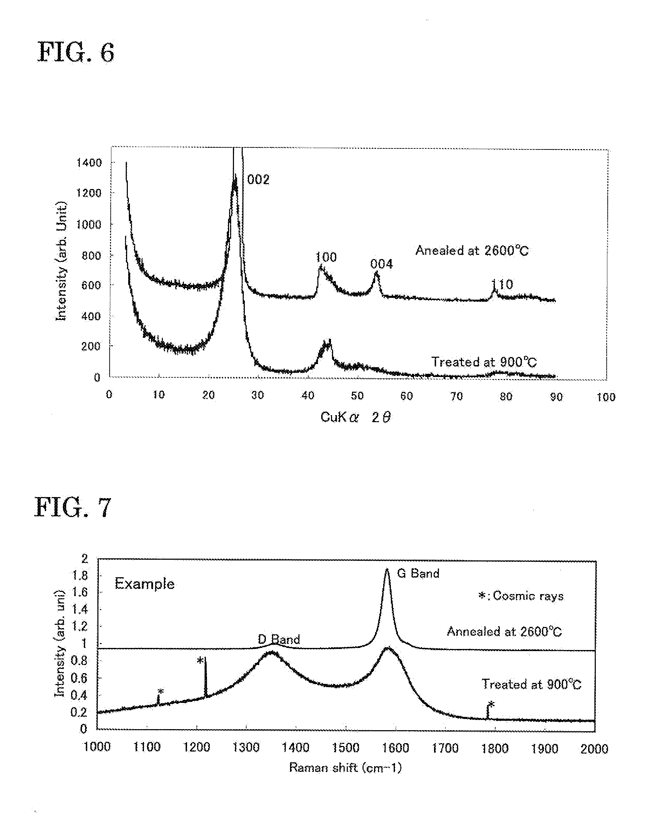

Further, X-ray diffraction analysis and Raman spectroscopic analysis were performed on the carbon fibrous structure before and after the high temperature heat treatment in order to examine changes in these analyses. The results are shown in Figs. 6 and 7, respectively.

Additionally, it was found that the carbon fibrous structures had an area based circle-equivalent mean diameter of 72.8 $\mu$m, bulk density of 0.0032 g/cm$^3$, Raman $I_D/I_G$ ratio of 0.090, TG combustion temperature of 786 °C, spacing of 3.383 Å, particle's resistance of 0.0083 $\Omega\cdot$cm, and density after decompression of 0.25 g/cm$^3$.

The mean diameter of the granular parts in the carbon fibrous structures was determined as 443 nm (SD 207 nm), that is 7.38 times larger than the outer diameter of the carbon fibers in the carbon fibrous structure. The mean roundness of the granular parts was 0.67 (SD 0.14).

Further, when the destruction test for carbon fibrous structure was performed according to the above mentioned procedure, the initial average fiber length ($D_{50}$) determined 30 minutes after the application of ultrasound was started was found to be 12.8 $\mu$m, while the mean length $D_{50}$ determined 500 minutes after the application of ultrasound was started was found to be 6.7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon fibers, and the granular parts still function as the binding site for the fibers mutually.

Table 2 provides a summary of the various physical properties of the carbon fibrous structure synthesized in Example 1.

[Table 1]

| Particle Distribution (pieces) | Example 1 |
|---|---|
| <50 $\mu$m | 49 |
| 50 $\mu$m to <60 $\mu$m | 41 |
| 60 $\mu$m to <70 $\mu$m | 34 |
| 70 $\mu$m to <80 $\mu$m | 32 |
| 80 $\mu$m to <90 $\mu$m | 16 |
| 90 $\mu$m to <100 $\mu$m | 12 |
| 100 $\mu$m to <110 $\mu$m | 7 |
| >110 $\mu$m | 16 |
| Area based circle-equivalent mean diameter | 72.8 $\mu$m |

[Table 2]

| | Example 1 |
|---|---|
| Area based circle-equivalent mean diameter | 72.8 $\mu$m |
| Bulk density | 0.0032g/cm$^3$ |

(continued)

|  | Example 1 |
|---|---|
| $I_D/I_G$ ratio | 0.090 |
| TG combustion temperature | 786 °C |
| Spacing for (002) faces | 3.383Å |
| Particle's resistance at 0.5 g/cm$^3$ | 0.0173Ω·cm |
| Particle's resistance at 0.8 g/cm$^3$ | 0.0096Ω·cm |
| Particle's resistance at 0.9 g/cm$^3$ | 0.0083Ω·cm |
| Density after decompression | 0.25g/cm$^3$ |

ii) Preparation of carbon fibrous structures' dispersion A

1.5 parts by weight of the carbon fibrous structures synthesized in the section i) of Example 1, 0.5 part by weight of polymethyl methacrylate, 0.1 part by weight of polyethylene terephthalate, and 100 part by weight of tetrahydrofuran were mixed by stirring mechanically under irradiation of 300W ultrasonic waves. Further, the mixture underwent the treatment using a bead mill which contained beads of 1 mm in diameter at a rate of 75 % by volume per the total volume of the above mentioned mixture, for 80 minutes. Thus, the dispersion A of the present invention was prepared. This dispersion was determined as a mean particle size of 0.3 $\mu$m and a velocity of 86 mpa·sec.

iii) Preparation of carbon fibrous structures' dispersion B

1.5 parts by weight of the carbon fibrous structures synthesized in the section i) of Example 1, 0.7 part by weight of ethyl cellulose, and 100 part by weight of isopropyl alcohol were mixed by stirring mechanically under irradiation of 300W ultrasonic waves. Further, the mixture underwent the treatment using a bead mill which contained beads of 1 mm in diameter at a rate of 75 % by volume per the total volume of the above mentioned mixture, for 60 minutes. Thus, the dispersion B of the present invention was prepared. This dispersion was determined as a mean particle size of 0.1 $\mu$m and a velocity of 12 mpa·sec.

iv) Production of electron emission source

As a film to be used as the electron emission source, a film of 3 $\mu$m in thickness was formed by spin coating the carbon fibrous structures' dispersion A, prepared in the above section ii), on a substrate. The anode current of this film was determined as 80 mA, and thus stable electron emitting were attained.

v) Production of electron emission source

A film of 1.5 $\mu$m in thickness was formed by spin coating the carbon fibrous structures' dispersion B, prepared in the above section ii), on a substrate. Then, the obtained film was irradiated with carbon dioxide laser of 4 mW so that the surface of the film was slightly vaporized off. Thus, a film to be used as the electron emission source was produced. The anode current of this film was determined as 120 mA. In addition, when a phosphorescent paint was coated onto the anode, the luminescence intensitywas determinedas 4500 Cd/cm$^2$, which can give an adequate illumination for a general luminaire.

<Control 1>

A carbon fibers' dispersion were prepared by the same procedure as in the above section ii) except that multi-layered carbon nanotubes each of which had 50 nm in diameter and did not show the three dimensional network configuration were used instead of the carbon fibrous structures. Then, using the obtained dispersion, a film to be used as the electron emission source was formed in accordance with the same procedure as in the above section v).
On the determination of the electron emitting capability, the anode current of this film was found to be 2 mA. Further, although a trial for luminescence was performed in accordance with the same procedure as in the above section v), the luminescence could not be observed because the anode current was too low.

**Claims**

1. Electron emission source which is manufactured by:

   preparing a carbon fibrous structures' dispersion which comprises at least carbon fibrous structures and a binder resin, wherein carbon fibrous structure comprises a three dimensional network of carbon fibers, each of which having an outside diameter of 15 - 100 nm, wherein the carbon fibrous structure further comprises a granular part, at which two or more carbon fibers are bound in a state that the carbon fibers extend outwardly therefrom, and wherein the granular part is produced in a growth process of the carbon fibers;
   applying the carbon fibrous structures' dispersion onto the substrate; and
   solidifying the applied carbon fibrous structures' dispersion.

2. The electron emission source according to Claim 1, wherein the electron emission source is manufactured by further applying a surface treatment in order to allow the carbon fibrous structures to be exposed on the surface, after solidifying the applied carbon fibrous structures' dispersion.

3. The electron emission source according to Claim 1 or 2, wherein the carbon fibrous structures have an area-based circle-equivalent mean diameter of 50 - 100 $\mu$m.

4. The electron emission source according to one of Claims 1 - 3, wherein the carbon fibrous structures have a bulk density of 0.0001 - 0.05g/cm$^3$.

5. The electron emission source according to one of Claims 1 - 4, wherein the carbon fibrous structures have an $I_D/I_G$ ratio determined by Raman spectroscopy of not more than 0.2.

6. The electron emission source according to one of Claims 1 - 5, wherein the carbon fibrous structures have a combustion initiation temperature in air of not less than 750 °C.

7. The electron emission source according to one of Claims 1 - 6, wherein the particle diameter of the granular part at a binding portion for carbon fibers may be larger than the outside diameters of the carbon fibers.

8. The electron emission source according to one of Claims 1 - 7, wherein the carbon fibrous structures are produced using as carbon sources of at least two carbon compounds, which have mutually different decomposition temperatures.

FIG.1

FIG.2

FIG. 3

CNRI     SEI    7.0kV   X2,500   10μm   WD 5.9mm

FIG. 4A

FIG. 4B

FIG. 5

## FIG. 6

## FIG. 7

FIG. 8

FIG. 9

**INTERNATIONAL SEARCH REPORT**

| International application No. |
|---|
| PCT/JP2006/320735 |

A. CLASSIFICATION OF SUBJECT MATTER
*H01J1/304*(2006.01)i, *H01J9/02*(2006.01)i, *B05D7/24*(2006.01)i, *C01B31/02*(2006.01)i

According to International Patent Classification (IPC) or to both national classification and IPC

B. FIELDS SEARCHED

Minimum documentation searched (classification system followed by classification symbols)
H01J1/30-1/316, H01J9/02, C01B31/02, B05D7/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-190247 A (NEC Corp.),<br>05 July, 2002 (05.07.02),<br>Full text; all drawings<br>& US 2004/104660 A1 & WO 2002/41348 A1 | 1,7<br>2-6,8 |
| Y | JP 2001-167692 A (Lucent Technologies Inc.),<br>22 June, 2001 (22.06.01),<br>Par. Nos. [0029] to [0030]; Fig. 1<br>& EP 1100106 A2 & KR 2001/51096 A<br>& US 6741019 B1 | 2 |
| Y | JP 2003-63812 A (Japan Science and Technology Corp.),<br>05 March, 2003 (05.03.03),<br>Full text; all drawings<br>(Family: none) | 3,6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 January, 2007 (15.01.07) | Date of mailing of the international search report<br>23 January, 2007 (23.01.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/320735 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-266170 A  (Showa Denko Kabushiki Kaisha), 18 September, 2002 (18.09.02), Full text; all drawings & US 2004/36060 A1      & WO 2002/049412 A1 | 3-6 |
| Y | JP 2004-176244 A  (Showa Denko Kabushiki Kaisha), 24 June, 2004 (24.06.04), Full text; all drawings & US 2006/46051 A1      & WO 2004/044289 A1 | 4-6,8 |
| A | JP 2004-250280 A  (Futaba Corp.), 09 September, 2004 (09.09.04), Full text; all drawings & US 2004/160157 A1 | 1-8 |
| A | JP 2004-311407 A  (Samsung SDI Co., Ltd.), 04 November, 2004 (04.11.04), Full text; all drawings & KR 2004/87552 A       & US 2004/263044 A1 | 1-8 |
| P,A | JP 3720044 B  (Bussan Nanotech Research Institute Inc.), 24 November, 2005 (24.11.05), Full text; all drawings & US 2006/216516 A1      & US 2006/216517 A1 & WO 2006/100809 A1 | 1-8 |
| E,A | JP 2006-294525 A  (Independent Administrative Institution National Institute for Materials Science), 26 October, 2006 (26.10.06), Full text; all drawings (Family: none) | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000036243 A

**Non-patent literature cited in the description**

- Latest Experimental Technique For Carbon Materials (Analysis Part. 2001